**Europäisches Patentamt**

**European Patent Office**

**Office européen des brevets**

(19)

(11) Numéro de publication: **0 067 734**
**A2**

(12)

# DEMANDE DE BREVET EUROPEEN

(21) Numéro de dépôt: **82400868.4**

(22) Date de dépôt: **11.05.82**

(51) Int. Cl.³: **C 03 C 17/23**

(30) Priorité: **15.05.81 JP 73272/81**

(43) Date de publication de la demande:
**22.12.82 Bulletin 82/51**

(84) Etats contractants désignés:
**BE DE FR IT LU NL SE**

(71) Demandeur: **SAINT-GOBAIN VITRAGE**
**Les Miroirs 18, avenue d'Alsace**
**F-92400 Courbevoie(FR)**

(72) Inventeur: **Kawahara, Hideo**
**205-3-8 Minami Sakurazuka 2-chome**
**Toyonaka-shi Osaka-fu(JP)**

(72) Inventeur: **Sakata, Nobuhiro**
**2-6-6 Komatsu Nishi-machi 2-chome**
**Nishinomiya-shi Hyogo-ken(JP)**

(74) Mandataire: **Leconte, Jean-Gérard et al,**
**Saint-Gobain Recherche 39, Quai Lucien Lefranc**
**F-93304 Aubervilliers Cedex(FR)**

(54) **Verre réfléchissant le rayonnement calorifique et présentant en outre une bonne résistance aux bases et aux acides ainsi qu'un bon pouvoir réfléchissant du rayonnement visible.**

(57) La présente invention concerne un verre revêtu d'un film d'oxydes de fer et de chrome, réfléchissant le rayonnement calorifique.

De tels verres présentent en outre une bonne résistance aux bases et aux acides et de bonnes propriétés de réflexion du rayonnement visible si les teneurs en fer (x exprimé en $\mu g/cm^2$) et en chrome (y esprimé en $\mu g/cm^2$) du film sont telles que:

$$0,54 \ x \geqslant y \geqslant 0,3 \ x$$

et avantageusement si:

$$16 - 0,75 \ x \geqslant y \geqslant 16 - 1,6 \ x$$

De tels verres sont utilisés dans le bâtiment.

./...

EP 0 067 734 A2

FIG_4

VERRE REFLECHISSANT LE RAYONNEMENT CALORIFIQUE
ET PRESENTANT EN OUTRE UNE BONNE RESISTANCE AUX BASES ET AUX ACIDES
AINSI QU'UN BON POUVOIR REFLECHISSANT DU RAYONNEMENT VISIBLE

La présente invention concerne un verre revêtu d'un film d'oxydes métalliques, ayant un haut pouvoir de réflexion du rayonnement calorifique et présentant une grande résistance, notamment vis à vis des acides et des bases.

Comme verres réfléchissant le rayonnement calorifique, on peut citer les verres revêtus d'un film d'oxydes métalliques tels que les oxydes de fer, chrome, cobalt, titane, étain, etc. De tels verres doivent protéger de la chaleur en réfléchissant le rayonnement solaire, et en plus, on leur demande une fonction esthétique en réfléchissant plus ou moins le rayonnement visible. D'autre part, pour que leurs qualités se conservent dans le temps, on demande également aux films déposés d'être très résistants.

Les verres qui réfléchissent le rayonnement calorifique et qui possèdent en même temps un bon taux de réflexion du rayonnement visible sont des verres revêtus d'un film d'oxydes de fer et de chrome ou d'un film d'oxyde de fer en tant que composant principal et d'oxydes de chrome et de cobalt par exemple en tant que composants secondaires.

On a constaté que lorsque le rapport pondéral $Fe_2O_3/Cr_2O_3$ était inférieur à 0,1, le pouvoir de réflexion du rayonnement calorifique diminuait ; par contre, lorsque ce rapport est supérieur à 5, c'est la résistance aux bases et aux acides qui diminue. On en a donc déduit que les verres réfléchissant le rayonnement calorifique et ayant en même temps une bonne résistance aux acides et aux bases étaient ceux dont le film de revêtement était constitué d'oxyde de fer et d'oxyde de chrome dans le rapport pondéral compris entre 0,1 et 5 et de façon plus précise entre 0,5 et 2,5.

Cependant, la demanderesse a cherché à préciser et à mieux comprendre le phénomène et elle a mis en outre en évidence les points suivants :

- quand on augmente la proportion d'oxyde de chrome dans le film de revêtement, la résistance dudit film aux acides est à peu près stable jusqu'à une certaine proportion d'oxyde de chrome, après quoi elle augmente subitement

- quand on augmente encore la proportion d'oxyde de chrome, la résistance aux acides continue d'être très élevée, mais par contre la résistance aux bases chute

- il existe une épaisseur de film pour laquelle on obtient à la fois une bonne résistance aux acides, en même temps qu'une bonne réflexion du rayonnement visible.

La présente invention, basée sur ces constatations, vise à fournir un verre revêtu d'un film métallique, réfléchissant le rayonnement calorifique, possédant un bon pouvoir de réflexion dans le visible et résistant à la fois aux bases et aux acides.

Le verre suivant l'invention revêtu d'un film d'oxydes de fer et de chrome est tel que :

$$0,54 \ x \geqslant y \geqslant 0,3 \ x$$
$$16 - 0,75 \ x \geqslant y \geqslant 16 - 1,6 \ x$$

x étant la teneur en fer du film exprimé en $\mu$ g/cm$^2$
y étant la teneur en chrome du film exprimé en $\mu$ g/cm$^2$

L'invention sera maintenant décrite plus en détail en référence aux figures jointes qui représentent :

- figure 1 : des courbes de même réflexion du rayonnement visible en relation avec les quantités de fer et de chrome contenues dans le film

- figure 2 : la courbe de résistance aux acides des films en fonction du pourcentage pondéral de chrome du film

- figure 3 : la courbe de résistance aux bases des films en fonction de leur pourcentage pondéral de chrome

- figure 4 : la délimitation du domaine de composition des films dans une représentation où la teneur pondérale en fer par cm$^2$ de film est en abscisse et la teneur pondérale en chrome par cm$^2$ de film est en ordonnée.

Pour mettre en évidence la composition des films à base d'oxydes de fer et de chrome conférant aux verres une bonne tenue aux acides et aux bases en même temps qu'une bonne réflexion du rayonnement, la demanderesse a pratiqué comme expliqué ci-dessous.

Ayant séché de l'acétylacétonate de fer en poudre et de l'acétylacétonate de chrome en poudre à 80°C jusqu'à une teneur en eau de 0,3 % en poids, par une méthode de séchage à sec au moyen d'un séchoir par air chaud recyclé, on a préparé 5 mélanges de poudres dont le rapport acétylacétonate de fer sur acétylacétonate de chrome est respectivement de 70/30, 60/40, 50/50, 40/60 et 30/70. Ensuite, on a écrasé ces mélanges de poudres et on a régularisé leur granulométrie de façon à ce qu'elle soit inférieure à 15 $\mu$ (en moyenne 7,2 $\mu$). Après cela, on a projeté ces 5 types de mélanges de poudres sur des plaques de verre de 300 mm x 300 mm x 5 mm préalablement chauffées pendant 4 minutes dans un four électriquement maintenu à 660°C, on a fait varier le temps de projection pour obtenir 10 à 20 types différents de films pour chaque type de mélanges de poudres. La température de verre au moment de la projection était de 565°C. Ensuite, on a mesuré la réflexion du rayonnement visible des verres revêtus de films d'oxydes de fer et de chrome dont le rapport est différent et dont l'épaisseur est également différente. Puis on a mesuré la quantité (en $\mu$ g/cm$^2$) de fer et de chrome de chacun des films.

La quantité de fer et de chrome des films a été déterminée par une mesure de fluorescence x après étalonnage à partir de solutions contenant du fer et du chrome et obtenues par trempage de verres revêtus de leurs films, dans de l'acide sulfurique chauffé à 140°C.

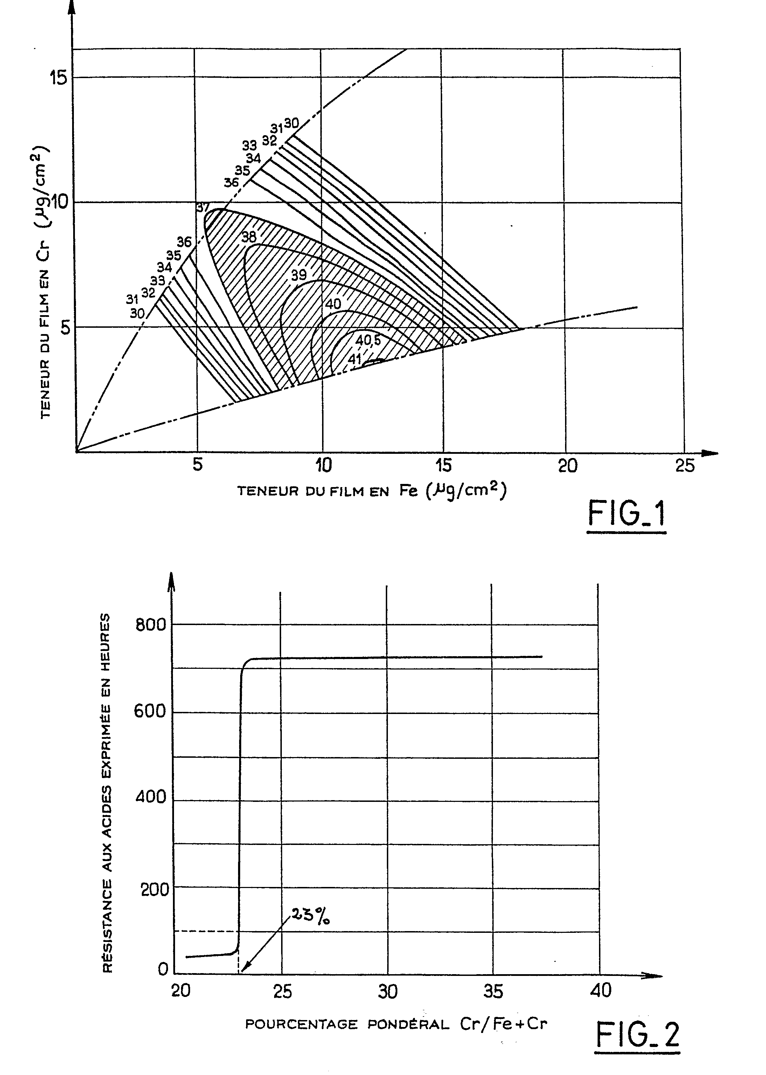

La figure 1 montre l'influence de la quantité de fer et de chrome du film sur le taux de réflexion du rayonnement visible. Elle représente des courbes de même taux de réflexion tracées dans un système d'axes où la teneur pondérale du film en fer est notée en abscisse, et la teneur en chrome est notée en ordonnée.

Il est clair que les films ayant une composition située dans la zone rayée de la figure présentent un taux de réflexion du rayonnement visible de plus de 37 %.

Ensuite pour mesurer la résistance des échantillons aux bases et aux acides, on les coupe en deux et on soumet chaque moitié respectivement à un test acide, à un test basique.

En ce qui concerne la résistance à l'acide, elle a été évaluée en nombre d'heures de trempe dans une solution d'acide chlorhydrique normale à 20°C jusqu'à la reconnaissance de la dénaturation des films, en observant l'état de ceux-ci toutes les 24 heures (plus de 720 heures ont été jugées comme 720 heures). Quant à la résistance aux bases, on a fait l'opération comme dans le cas de la résistance à l'acide, mais en trempant l'échantillon dans une solution de soude caustique normale à 20°C.

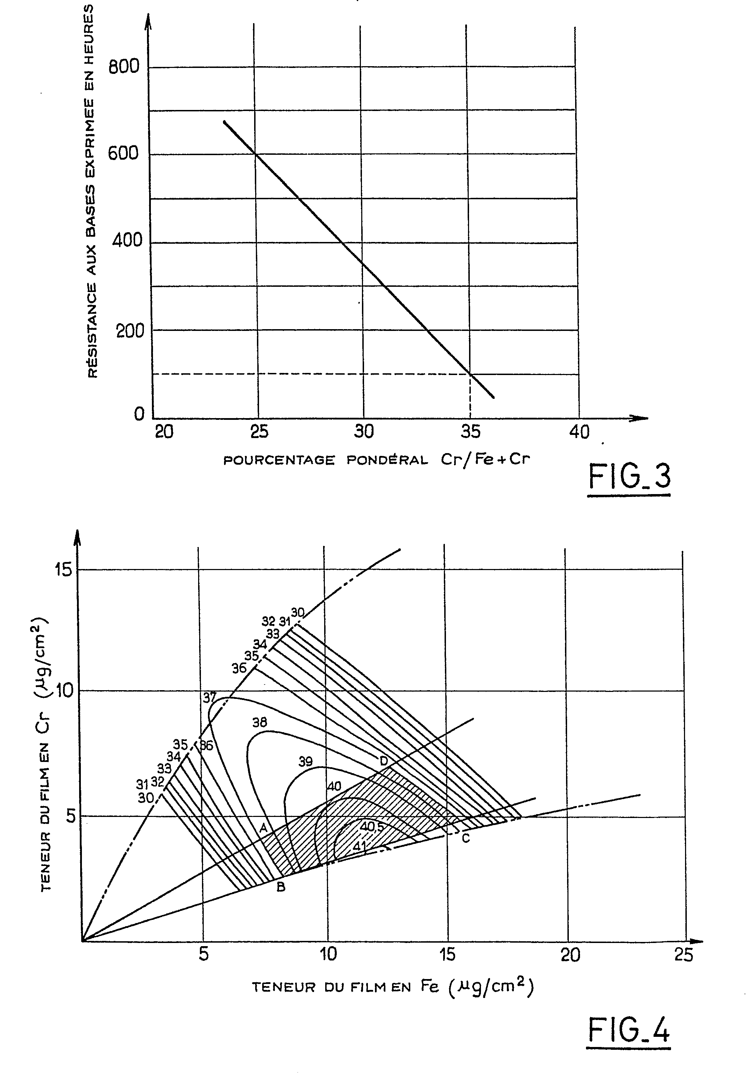

Les figures 2 et 3 montrent les relations entre le pourcentage en poids de chrome et les résistances ainsi obtenues.

x étant la teneur en fer en $\mu$ g/cm$^2$ des films, et y étant la teneur en chrome en $\mu$ g/cm$^2$ des films, on déduit de la figure 2 que présentent une résistance aux acides suffisante, les films tels que :

$$\frac{y}{x + y} \geqslant 0,23$$

et on déduit de la figure 3 que présentent une résistance aux bases suffisante, les films tels que :

$$\frac{y}{x + y} \geqslant 0,35$$

étant donné qu'une résistance aux bases d'au moins 96 heures est considérée comme un minimum.

Il en résulte que $0,3 \, x \geqslant y \geqslant 0,54 \, x$

En traçant sur la figure 1, les droites $y = 0,3 \, x$ et $y = 0,54 \, x$ on limite le domaine dans lequel doivent se situer les échantillons qui présentent les caractéristiques convenables de résistances aux acides et aux bases. Ce domaine est celui qui est hachuré sur la figure 4.

Si l'on veut, en même temps, que les verres présentent un taux de réflexion d'au moins 37 %, les verres qui peuvent convenir sont ceux situés à l'intérieur du quadrilatère A B C D, figure 4.

L'équation des droites A B et C D est :

$$y = 16 - 1,6 \, x$$

et $$y = 16 - 0,75 \, x$$

Par conséquent, les verres ayant une haute résistance aux bases et aux acides, et présentant en même temps un taux de réflexion important du rayonnement visible sont tels que :

$$0,54 \, x \geqslant y \geqslant 0,3 \, x$$

et avantageusement

$$16 - 0,75 \, x \geqslant y \geqslant 16 - 1,6 \, x$$

REVENDICATIONS

1. Verre revêtu d'un film à base d'oxyde de fer et d'oxyde de chrome réfléchissant le rayonnement calorifique, présentant une forte résistance aux bases et aux acides et une bonne réflexion du rayonnement visible, caractérisé en ce que les teneurs en fer et en chrome dudit film sont telles que :

$$0,54 \ x \quad \geqslant \quad y \quad \geqslant \quad 0,3 \ x$$

x étant la teneur en fer du film exprimée en $\mu$g par $cm^2$ de surface du film,

y étant la teneur en chrome du film exprimée en $\mu$g par $cm^2$ de surface dudit film

2. Verre selon la revendication 1, caractérisé en ce qu'en outre :

$$16 - 0,75 \ x \quad \geqslant \quad y \quad \geqslant \quad 16 - 1,6 \ x$$

TENEUR DU FILM EN Cr ($\mu$g/cm²)

TENEUR DU FILM EN Fe ($\mu$g/cm²)

FIG_1

RÉSISTANCE AUX ACIDES EXPRIMÉE EN HEURES

23%

POURCENTAGE PONDÉRAL Cr/Fe+Cr

FIG_2

0067734

FIG_3

FIG_4